# EUROPEAN PATENT APPLICATION

(11) **EP 4 794 142 A1**
(43) Date of publication of application: **19.08.2026**
(21) Application number: 25158658.2
(22) Date of filing: 18.02.2025
(51) Int. Cl.: H02G 1/12

(54) **WIRE STRIPPER WITH REPLACEABLE SPRING**

(71) Applicant: Kauw Yehi Industrial Co., Ltd., New Taipei City 236 (TW)
(72) Inventor: YEN, Yu-Ting, 236 New Taipei City (TW)
(74) Representative: 2K Patent Partnerschaft mbB

(57) **Abstract**

A wire stripper (1) with a replaceable spring includes a stripper handle pair (10), a wire stripping structure (20), a spring set (30), and a pressing set (40). The stripper handle pair (10) includes a first handle (11), a second handle (12), and a pivot (13). The first handle (11) and the second handle (12) are pivotally connected via the pivot (13). The wire stripping structure (20) is correspondingly arranged on the stripper handle pair (10). The spring set (30) is removably mounted on the first handle (11) and the second handle (12). The spring set (30) includes a first pin (31) located on the first handle (11), a second pin (32) located on the second handle (12), and a first spring (33) straddling between the first pin (31) and the second pin (32). The pressing set (40) is disposed on the stripper handle pair (10). The spring set (30) is pressed by the pressing set (40) to be undetachable from the stripper handle pair (10). Accordingly, the spring set may be replaced as needed.

## Description

### BACKGROUND OF THE DISCLOSURE

### Technical Field

The present disclosure relates to a wire stripper, and more particularly, to a wire stripper with a replaceable spring.

### Description of Related Art

Most of the wire strippers on the market are equipped with a spring mechanism. The spring mechanism primarily serves to provide an elastic force for restoring stripper handles, so as to assist users in saving effort and improving operating efficiency during use. Further, in related-art wire strippers, the spring is fixedly mounted between the stripper handles of the wire stripper by a fixing manner, and is tightly connected to a clamping member or a stripper handle assembly. This fixed mounting ensures the provision of a stable and reliable elastic force during use.

However, when the spring of the related-art wire stripper wears out from long-term use or loses its elasticity due to excessive stretching, users are unable to simply replace the damaged spring. Instead, they must disassemble or replace the entire handle assembly. This fixed-spring design not only complicates maintenance and increases costs of maintenance, but also reduces the service life and reliability of the wire strippers. Additionally, if the spring tension in the wire stripper is too high or too low, it cannot be adjusted simply by replacing the spring. This limitation restricts the wire stripper's adaptability to various operational requirements across different environments.

In light of these issues, the applicant has conducted extensive research and applied theoretical principles to develop this innovative solution, which features a well-reasoned design that effectively addresses the aforementioned shortcomings.

### SUMMARY OF THE DISCLOSURE

It is an objective of the present application to provide a wire stripper with a replaceable spring, enabling easy replacement of a spring set.

In order to achieve the above objective, the present disclosure provides a wire stripper with a replaceable spring. The wire stripper includes a stripper handle pair, a wire stripping structure, a spring set, and a pressing set. The stripper handle pair includes a first handle, a second handle, and a pivot. The first handle and the second handle are pivotally connected via the pivot. The wire stripping structure is correspondingly disposed on the stripper handle pair. The spring set is removably mounted on the first handle and the second handle. The spring set includes a first pin disposed on the first handle, a second pin disposed on the second handle, and a first spring spanning between the first pin and the second pin. The pressing set is mounted on the stripper handle pair. The spring set is pressed by the pressing set to prevent detaching from the stripper handle pair.

In one embodiment of the present disclosure, the wire stripper with the replaceable spring further includes a positioning plate set. The positioning plate set includes a first positioning plate disposed on the first handle and a second positioning plate disposed on the second handle, wherein the first positioning plate is pressed by the pressing set and the first pin is inserted through the first positioning plate, and the second positioning plate is pressed by the pressing set and the second pin is inserted through the second positioning plate.

In one embodiment of the present disclosure, the pressing set includes a pressing plate disposed on the first handle and a fixed seat disposed on the second handle, the pressing plate is disposed on one side of the first pin and presses an outer edge of the first positioning plate, and the fixed seat is disposed on one side of the second pin and presses an outer edge of the second positioning plate.

In one embodiment of the present disclosure, the first handle is provided with a first groove for accommodating the first positioning plate, and the second handle is provided with a second groove for accommodating the second positioning plate.

In one embodiment of the present disclosure, both the first positioning plate and the second positioning plate are anchor-shaped, and the first groove and the second groove are shaped to correspond with the first positioning plate and the second positioning plate, respectively.

**In** one embodiment of the present disclosure, the first positioning plate extends with a first slide rail, the second positioning plate correspondingly extends with a second slide rail, and the first slide rail and the second slide rail are arranged in a staggered and overlapping configuration.

In one embodiment of the present disclosure, the spring set further includes a second spring, the second spring spans between the first pin and the second pin, and the second spring and the first spring are correspondingly disposed at two ends of the first pin and the second pin.

In one embodiment of the present disclosure, two ends of the first pin are each provided with a first neck-shrinking section, and two ends of the first spring are respectively sleeved on the first neck-shrinking sections; two ends of the second pin are each provided with a second neck-shrinking section, and two ends of the second spring are respectively sleeved on the second neck-shrinking sections.

In one embodiment of the present disclosure, the wire stripper with the replaceable spring further includes a supporting plate set coupled to one side of the first handle and the second handle, wherein the supporting plate set accommodates the second spring.

In one embodiment of the present disclosure, the wire stripper with the replaceable spring further includes an outer cover coupled to the supporting plate set, wherein the outer cover covers the supporting plate set and the second spring.

Compared to the related art, the wire stripper with the replaceable spring described in this disclosure features a spring set that is removably mounted on the first and second handles. This spring set includes a pair of pins and a spring and is securely held in place by the pressure exerted by the pressing set, thereby preventing detachment from the stripper handle pair. Moreover, once the pressing set is disengaged, the spring may be easily replaced, thereby enhancing the convenience and practicality of use.

### BRIEF DESCRIPTION OF THE DRAWINGS

FIG. 1 and FIG. 2 are perspective external appearance views of a wire stripper with a replaceable spring of the present disclosure, viewed from two side directions.
FIG. 3 is a perspective exploded view of the wire stripper with the replaceable spring of the present disclosure.
FIG. 4 is a plan view of the wire stripper with the replaceable spring of the present disclosure.
FIG. 5 is a cross-sectional view of the wire stripper with the replaceable spring of the present disclosure.
FIG. 6 is a usage view of the wire stripper with the replaceable spring of the present disclosure.
FIG. 7 shows the wire stripper with the replaceable spring according to another embodiment of the present disclosure.

### DETAILED DESCRIPTION

A detailed description and technical content of the present disclosure are described below with reference to the drawings. However, the attached drawings are only for reference and illustration, and are not intended to limit the present disclosure.

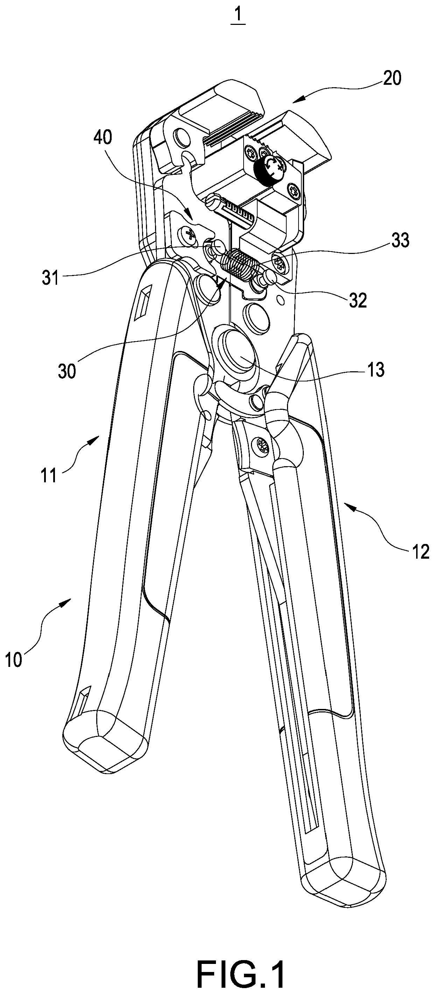

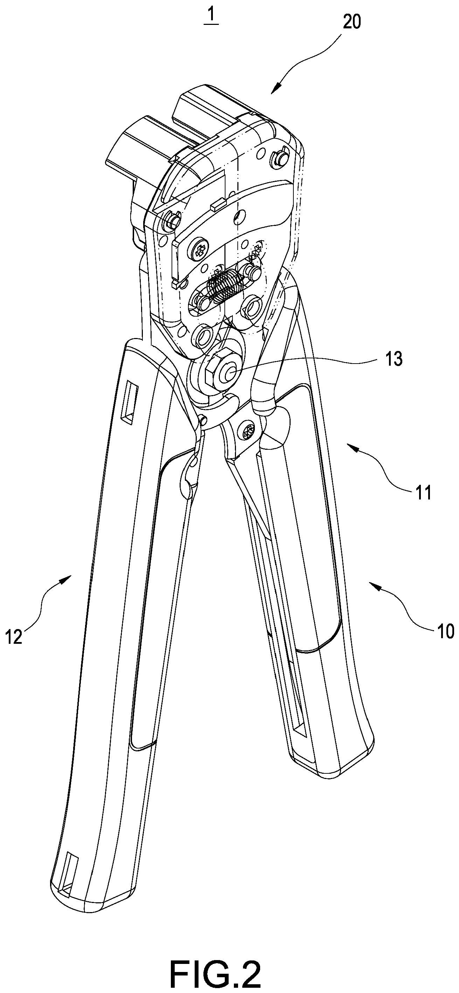

Please refer to FIG. 1 and FIG. 2, which are perspective external appearance views of a wire stripper with a replaceable spring of the present disclosure, viewed from two side directions. The wire stripper 1 with the replaceable spring of the present disclosure includes a stripper handle pair 10, a wire stripping structure 20, a spring set 30, and a pressing set 40. The wire stripping structure 20 and the spring set 30 are correspondingly disposed on the stripper handle pair 10. The spring set 30 is coupled to the stripper handle pair 10 through the pressing from the pressing set 40. The structure of the wire stripper 1 with the replaceable spring is described in detail below.

The stripper handle pair 10 includes a first handle 11, a second handle 12, and a pivot 13. The first handle 11 and the second handle 12 are pivotally connected via the pivot 13, allowing them to be opened and closed relative to each other. The wire stripping structure 20 is disposed on the stripper handle pair 10 and designed for stripping cables.

The spring set 30 is removably mounted on the first handle 11 and the second handle 12. The spring set 30 includes a first pin 31 disposed on the first handle 11, a second pin 32 disposed on the second handle 12, and a first spring 33 disposed between the first pin 31 and the second pin 32. Further, the pressing set 40 is installed on the stripper handle pair 10. The spring set 30 is pressed by the pressing set 40 to prevent being detached from the stripper handle pair 10.

In the present embodiment, the spring set 30 further includes a second spring 34. The second spring 34 spans (straddles) between the first pin 31 and the second pin 32. In practice, the spring set 30 may be equipped with either just the first spring 33 or the second spring 34.

It should be noted that two ends of the first pin 31 of the present disclosure are each provided with a first neck-shrinking section 310. Two ends of the first spring 33 are respectively connected to (hung on) the first neck-shrinking sections 310. Further, two ends of the second pin 32 are each provided with a second neck-shrinking section 320. Two ends of the second spring 34 are respectively connected to (hung on) the second neck-shrinking sections 320. However, the actual implementation is not limited to these configurations.

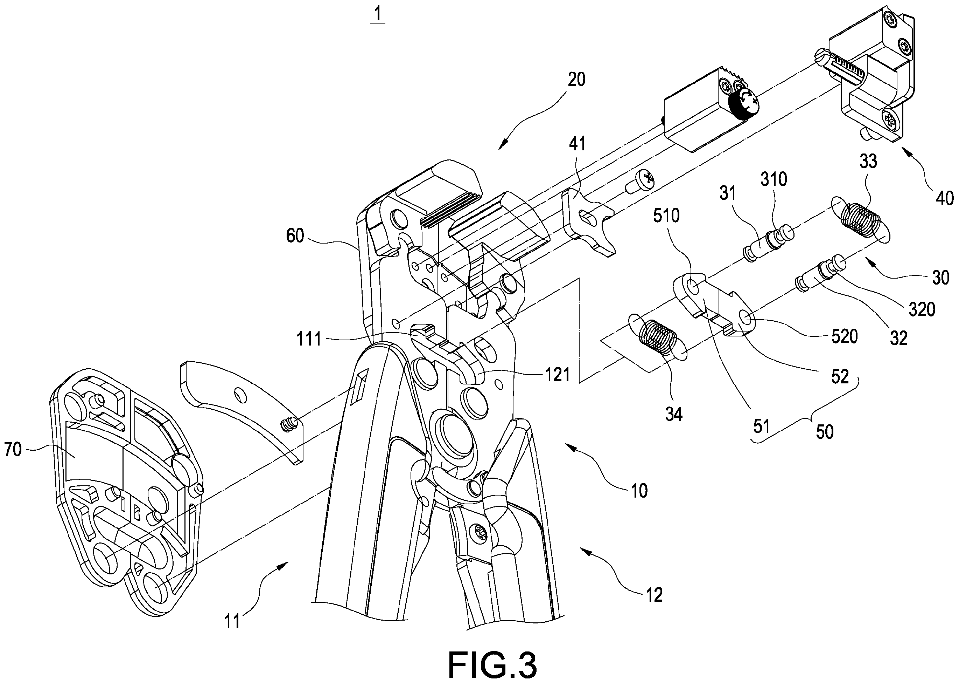

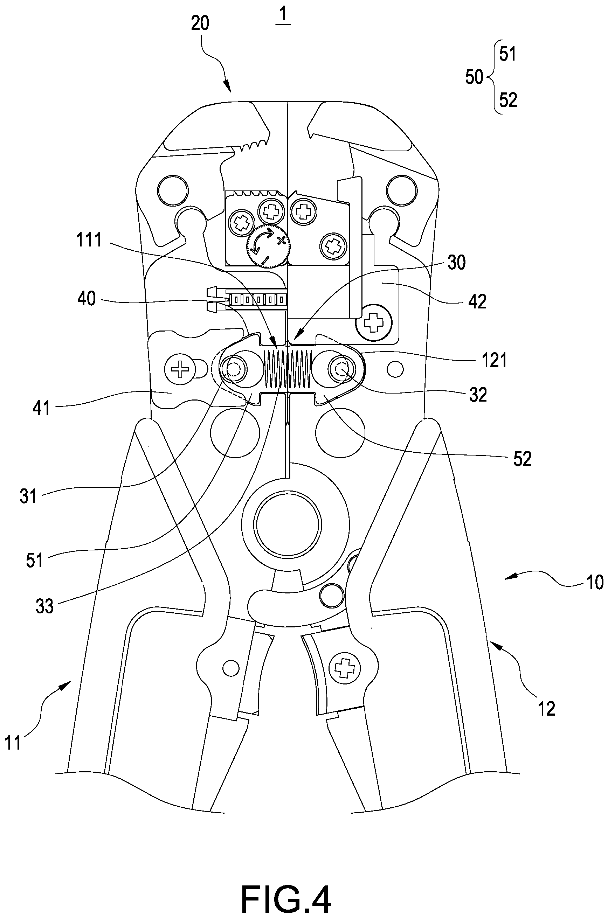

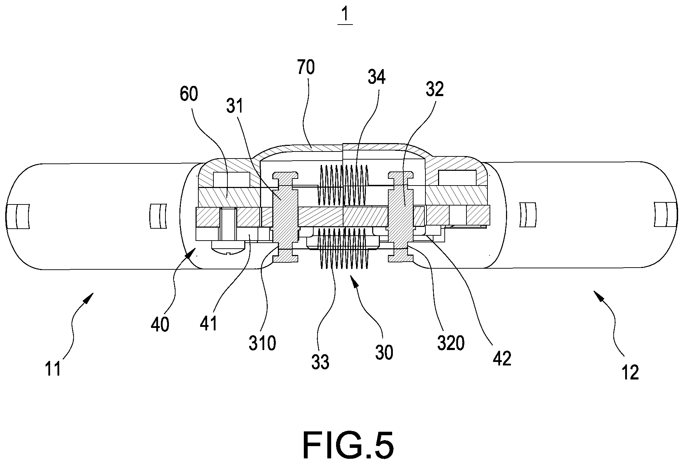

Please also refer to FIGS. 3, 4, and 5, which are a perspective exploded view, a plan view, and a cross-sectional view of the wire stripper with the replaceable spring of the present disclosure, respectively. The wire stripper 1 with the replaceable spring of the present disclosure includes the stripper handle pair 10. Further, the wire stripping structure 20 and the pressing set 40 are mounted on the stripper handle pair 10, and the spring set 30 is secured to the stripper handle pair 10 through the pressing from the pressing set 40.

Specifically, the wire stripper 1 with the replaceable spring of the present disclosure further includes a positioning plate set 50. The positioning plate set 50 includes a first positioning plate 51 disposed on the first handle 11 and a second positioning plate 52 disposed on the second handle 12. Further, the first positioning plate 51 is pressed by the pressing set 40, and the first pin 31 is inserted through the first positioning plate 51. The second positioning plate 52 is pressed by the pressing set 40, and the second pin 32 is inserted through the second positioning plate 52.

More specifically, the first positioning plate 51 includes a first through hole 510, and the first pin 31 is inserted in the first through hole 510. The second positioning plate 52 includes a second through hole 520, and the second pin 32 is inserted in the second through hole 520. In addition, the first handle 11 is provided with a first groove 111 for accommodating the first positioning plate 51. The second handle 12 is provided with a second groove 121 for accommodating the second positioning plate 52.

In one embodiment of the present disclosure, both the first positioning plate 51 and the second positioning plate 52 are anchor-shaped. The first groove 111 and the second groove 121 are shaped correspondingly with the first positioning plate 51 and the second positioning plate 52, respectively. Further, the pressing set 40 includes a pressing plate 41 disposed on the first handle 11 and a fixed seat 42 disposed on the second handle 12. The pressing plate 41 is located on one side of the first pin 31 and presses an outer edge of the first positioning plate 51. The fixed seat 42 is disposed on one side of the second pin 32 and presses an outer edge of the second positioning plate 52. Accordingly, the spring set 30 is pressed by the pressing set 40 to prevent being detached from the stripper handle pair 10.

In the present embodiment, the wire stripper 1 with the replaceable spring further includes a supporting plate set 60 and an outer cover 70. The supporting plate set 60 is coupled to one side of the first handle 11 and the second handle 12. The supporting plate set 60 accommodates the second spring 34. In addition, the outer cover 70 covers the supporting plate set 60 and the second spring 34.

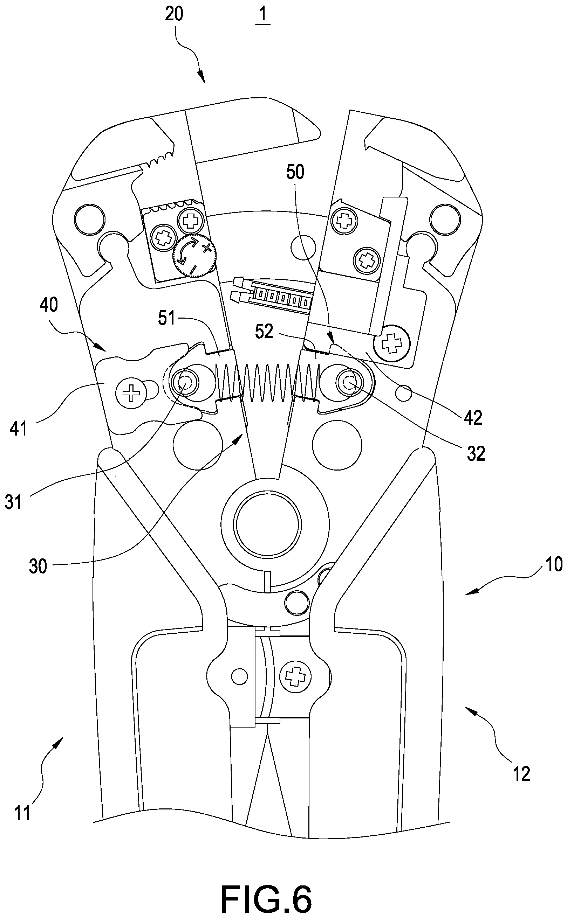

Please also refer to FIG. 6, which is a usage view of the wire stripper with the replaceable spring of the present disclosure. When external force is applied, the first handle 11 and the second handle 12 are close to each other, and the first spring 33 is stretched. During this time, a cable may be placed on a blade set between the first handle 11 and the second handle 12 for cutting. After cutting, the restoring force of the first spring 33 returns the first handle 11 and the second handle 12 to the original open state.

It should be noted that the first spring 33 (or the second spring 34) of the spring set 30 of the present disclosure may be selected or replaced. For actual use, the pressing set 40 needs to be removed first to release the pressing action on the positioning plate set 50. Subsequently, the positioning plate set 50 may be removed from the first handle 11 and the second handle 12, thus allowing for the replacement of the first spring 33 (or the second spring 34).

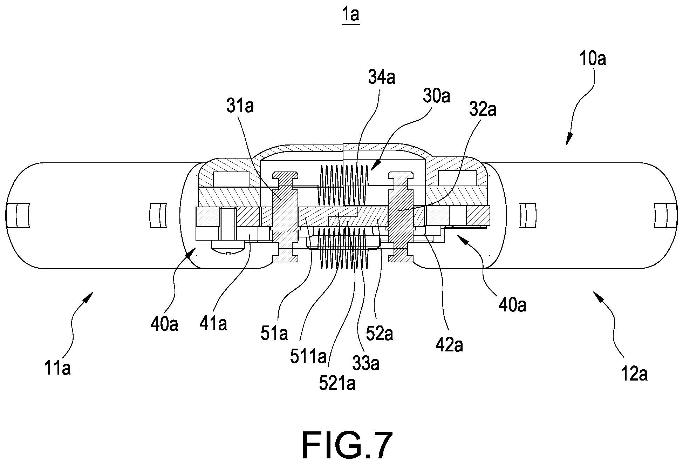

Please refer to FIG. 7, which illustrates another embodiment of the wire stripper with the replaceable spring of the present disclosure. This embodiment is similar to the previous embodiment. The wire stripper 1a with the replaceable spring includes a stripper handle pair 10a, a spring set 30a, a pressing set 40a and a positioning plate set 50a. The stripper handle pair 10a includes a first handle 11a and a second handle 12a. The spring set 30a includes a first pin 31a disposed on the first handle 11a, a second pin 32a disposed on the second handle 12a, and a first spring 33a and a second spring 34a that span (straddle) between the first pin 31a and the second pin 32a. The pressing set 40a includes a pressing plate 41a and a fixed seat 42a. The positioning plate set 50a includes a first positioning plate 51a disposed on the first handle 11 and a second positioning plate 52a disposed on the second handle 12a.

The distinguishing feature of this embodiment is that the first positioning plate 51a extends with a first slide rail 511a. Similarly, the second positioning plate 52a extends with a second slide rail 521a. The first slide rail 511a and the second slide rail 521a are arranged in a staggered, overlapping configuration to facilitate a more stable assembly of the positioning plate set 50a into the stripper handle pair 10a.

## Claims

1. A wire stripper (1), comprising:
a stripper handle pair (10), comprising a first handle (11), a second handle (12), and a pivot (13), wherein the first handle (11) and the second handle (12) are pivotally connected via the pivot (13);
a wire stripping structure (20), correspondingly disposed on the stripper handle pair (10);
a spring set (30), removably mounted on the first handle (11) and the second handle (12), comprising a first pin (31) disposed on the first handle (11), a second pin (32) disposed on the second handle (12), and a first spring (33) straddling between the first pin (31) and the second pin (32); and
a pressing set (40), mounted on the stripper handle pair (10), wherein the spring set (30) is pressed by the pressing set (40) to be undetachable from the stripper handle pair (10).

2. The wire stripper (1) according to claim 1, further comprising:
a positioning plate set (50), comprising a first positioning plate (51) disposed on the first handle (11) and a second positioning plate (52) disposed on the second handle (12), wherein the first positioning plate (51) is pressed by the pressing set (40) and the first pin (31) is inserted through the first positioning plate (51), and the second positioning plate (52) is pressed by the pressing set (40) and the second pin (32) is inserted through the second positioning plate (52).

3. The wire stripper (1) according to claim 2, wherein the pressing set (40) comprises a pressing plate (41) disposed on the first handle (11) and a fixed seat (42) disposed on the second handle (12), the pressing plate (41) is disposed on one side of the first pin (31) and presses an outer edge of the first positioning plate (51), and the fixed seat (42) is disposed on one side of the second pin (32) and presses an outer edge of the second positioning plate (52).

4. The wire stripper (1) according to claim 2 or 3, wherein the first handle (11) comprises a first groove (111) configured to accommodate the first positioning plate (51), and the second handle (12) comprises a second groove (121) configured to accommodate the second positioning plate (52).

5. The wire stripper (1) according to claim 4, wherein both the first positioning plate (51, 51a) and the second positioning plate (52, 52a) are anchor-shaped, and the first groove (111) and the second groove (121) are shaped correspondingly with the first positioning plate (51) and the second positioning plate (52), respectively.

6. The wire stripper (1) according to claim 4 or 5, wherein the first positioning plate (51a) comprises a first slide rail (511a) extended therefrom, the second positioning plate (52a) comprises a second slide rail (521a) extended therefrom, and the first slide rail (511a) and the second slide rail (521a) are arranged in a staggered and overlapping configuration.

7. The wire stripper (1) according to any of the claims 1 to 6, wherein the spring set (30) further comprises a second spring (34), the second spring (34) straddles between the first pin (31) and the second pin (32), and the second spring (34) and the first spring (33) are correspondingly disposed at two ends of the first pin (31) and two ends of the second pin (32).

8. The wire stripper (1) according to claim 7, wherein the first pin (31) comprises a first neck-shrinking section (310) disposed on each end thereof, and two ends of the first spring (33) respectively connected to two first neck-shrinking sections (310); the second pin (32) comprises a second neck-shrinking section (320) disposed on each end thereof, and two ends of the second spring (34) are respectively connected to two second neck-shrinking sections (320).

9. The wire stripper (1) according to any of the claims 7 to 8, further comprising a supporting plate set (60) coupled to one side of the first handle (11) and one side of the second handle (12), wherein the supporting plate set (60) is configured to accommodate the second spring (34).

10. The wire stripper (1) according to claim 9, further comprising an outer cover (70) coupled to the supporting plate set (60), wherein the outer cover (70) is configured to cover the supporting plate set (60) and the second spring (34).
